# EUROPÄISCHE PATENTANMELDUNG

(11) **EP 0 828 154 A1**
(43) Veröffentlichungstag der Anmeldung: **11.03.1998**
(21) Anmeldenummer: 97114458.9
(22) Anmeldetag: 21.08.1997
(51) Int. Cl.: G01N 21/85

(54) **Sonde zur optischen Erfassung fluidisierter Partikel oder Tropfen**

(30) Priorität: 22.08.1996 DE 19633963
(71) Anmelder: Schaffner, David, Dr., 4310 Rheinfelden (CH)
(72) Erfinder: Schaffner, David, Dr.sc.techn., 4310 Rheinfelden (CH); Pauli, Martin, 3365 Grasswil (CH)
(74) Vertreter: Klingseisen, Franz, Dipl.-Ing.

(57) **Zusammenfassung**

Es wird eine Sonde zur optischen Erfassung fluidisierter Partikel oder Tropfen vorgesehen, die mit einer Fassung (17) zur Befestigung an einer Kamera und einem stabförmigen Hohlkörper (18) versehen ist, in dem durch seitliche Öffnungen (12) ein Meßvolumen (1) ausgebildet ist, das durch transparente Elemente (2,3) gegenüber dem Hohlraum des Hohlkörpers druckdicht abgeschlossen ist. In einer bevorzugten Ausführung ist eine Lichtquelle (5) auf der der Fassung (17) gegenüberliegenden Seite des Meßvolumens (1) in dem Hohlkörper angeordnet, wobei eine Stromversorgungsleitung (6) durch den Hohlkörper zu der Lichtquelle führt.

## Beschreibung

Die Erfindung betrifft eine Sonde zur optischen Erfassung fluidisierter Partikel oder Tropfen, mittels der es möglich ist, unter Zuhilfenahme einer Videokamera in einem bewegten Medium Partikel oder Tropfen optisch zu erfassen.

Oft wäre man daran interessiert, bewegte, kleine Partikel (5µm bis 1000 µm) oder Tropfen zu analysieren und dies auch bei hohen Konzentrationen. Die representative Probenahme aus fluidisierten Systemen, insbesondere unter Druck oder Vakuum, ist äußerst aufwendig oder oft gar nicht möglich, so daß man gezwungen ist, direkt im System zu messen. Herkömmliche Laserpartikelmeßgeräte, beruhend auf Beugungs- oder Streulichtmessungen, scheitern oft an den hohen Partikelkonzentrationen, an der Probenahme oder am online-Einsatz. Andere optische Systeme mit herkömmlichen Meßanordnungen sind meist wegen Lichtmangel bei den notwendigen geringen Belichtungszeiten nicht einsetzbar.

Der Erfindung liegt die Aufgabe zugrunde, eine Sonde vorzuschlagen, mittels der auch unter Druck oder Vakuum in einfacher Weise Messungen kleiner Partikel durch eine Kamera vorgenommen werden können.

Diese Aufgabe wird erfindungsgemäß durch die Merkmale des Anspruchs 1 gelöst. Der Hohlkörper der Sonde kann direkt in das zu untersuchende Fluid eingetaucht werden, wobei durch die Kamera das beleuchtete Meßvolumen aufgenommen werden kann.

Hierdurch können kleine, fluidisierte und bewegte Partikel oder Tropfen bis 5 µm Durchmesser bei einer großen Bewegungsgeschwindigkeit scharf abgebildet werden, auch wenn es sich um ein Fluidsystem unter hohem Druck oder Vakuum handelt. Das Problem der Probenahme entfällt, da die Sonde direkt in das Medium eingetaucht werden kann.

Die Partikel lassen sich mit herkömmlichen CCD-Kameras optisch erfassen. Die aufgenommenen Bilder können mit einer Bildverarbeitungssoftware ausgewertet werden und zudem erhält man reale Bilder der Partikel, die Aufschluß über die tatsächliche Partikelform geben.

Die Erfindung wird beispielsweise anhand der Zeichnung näher erläutert. Es zeigen
- Fig. 1: einen Längsschnitt durch eine Sonde,
- Fig. 2: einen Querschnitt durch das Meßvolumen längs der Linie A-A in Fig. 1
- Fig. 3: einen Längsschnitt durch eine abgewandelte Ausführungsform,
- Fig. 4: einen Längsschnitt durch eine weitere Ausführungsabwandlung, und
- Fig. 5: eine abgewandelte Ausführungsform.

Die Sonde weist eine Fassung 17 für eine nicht dargestellte Kamera, beispielsweise eine hoch auflösende CCD-Kamera auf, an der ein stabförmiger Hohlkörper 18 angebracht ist, der zweckmäßigerweise einen Kreisquerschnitt aufweist, aber auch eine andere Umfangsgestalt haben kann. Der stabförmige Hohlkörper 18 kann beispielsweise einen Außendurchmesser von etwa 15mm haben.

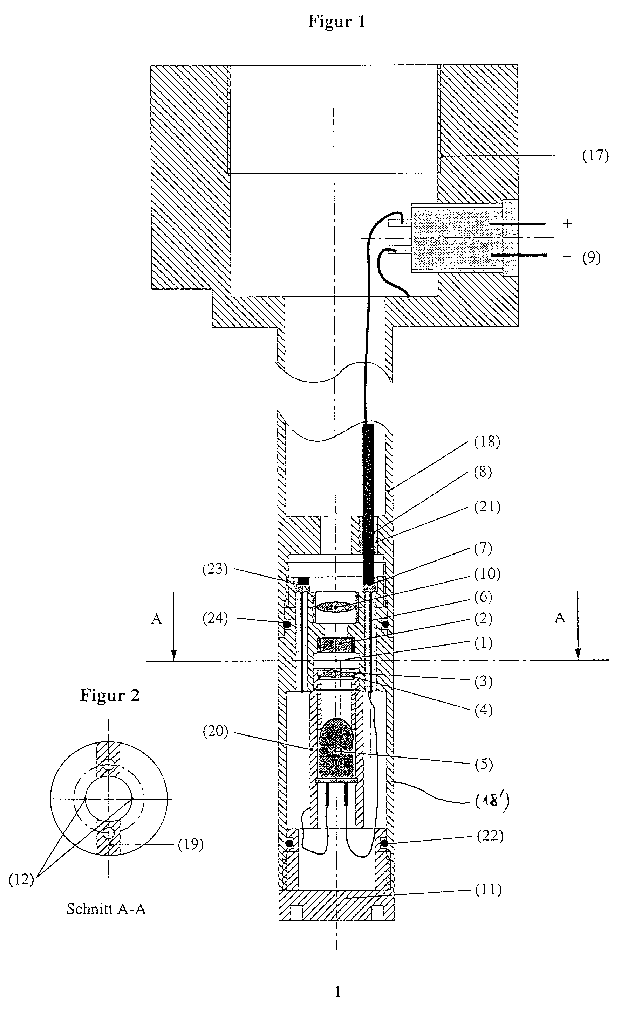

Zwischen dem stabförmigen Hohlkörper 18 und einer Verlängerung 18' des Hohlkörpers ist ein Meßvolumen 1 ausgebildet, das durch seitliche Öffnungen 12 (Fig. 2) nach außen offen ist. Diese Öffnungen 12 können beispielsweise durch Einfräsungen an dem Hohlkörper 18 ausgebildet werden, so daß Stege 19 verbleiben. Anstelle der in Fig. 2 wiedergegebenen zwei Stege 19 kann auch nur ein Steg 19 vorgesehen sein oder es können drei über den Umfang verteilte Öffnungen 12 vorgesehen werden, so daß sich drei Stege ergeben. Das Meßvolumen 1 ist auf der Seite der Kamera durch ein Glasfenster 2 druckdicht gegenüber dem Hohlraum des Hohlkörpers 18 abgeschlossen. Vorzugsweise wird ein mit Glas verschmolzenes Saphirglas 2 optischer Qualität vorgesehen. Auf der der Kamera gegenüberliegenden Seite des Meßvolumens 1 ist eine Lichtquelle 5 in der Hohlkörperverlängerung 18' angebracht, wobei zwischen Meßvolumen 1 und Lichtquelle 5 ein Saphirglas 2 und eine Linse 3 angeordnet ist, die durch einen O-Ring 4 druckdicht angeordnet oder zum Saphirglas 2 mit Glas eingeschmolzen ist. Die Lichtquelle 5 kann eine leistungsstarke LED oder eine Laserdiode sein. Mittels einer Triggersteuerung kann diese Lichtquelle in Abstimmung auf die CCD-Kamera so gesteuert werden, daß sich Belichtungszeiten von 200ns erzielen lassen. Die Lichtquelle 5 ist in einer Hülse 20 angeordnet. Die Kondensorlinse 3 bzw. ein entsprechendes optisches System dient dazu, daß das Licht der Lichtquelle 5 das zylindrische Meßvolumen 1 homogen ausleuchtet. Das optische System kann auch als Dunkelfeldkondensor ausgebildet sein.

Zwischen Fassung 17 und Meßvolumen 1 ist eine Linse 10 vorgesehen, die dazu dient, die optische Tubuslänge zu vergrößern.

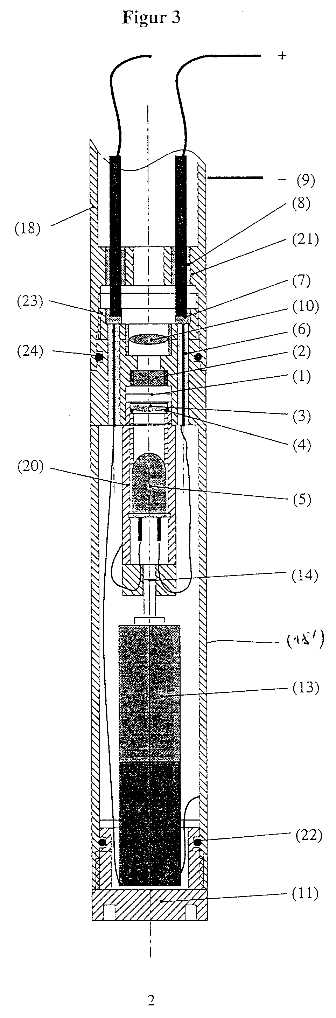

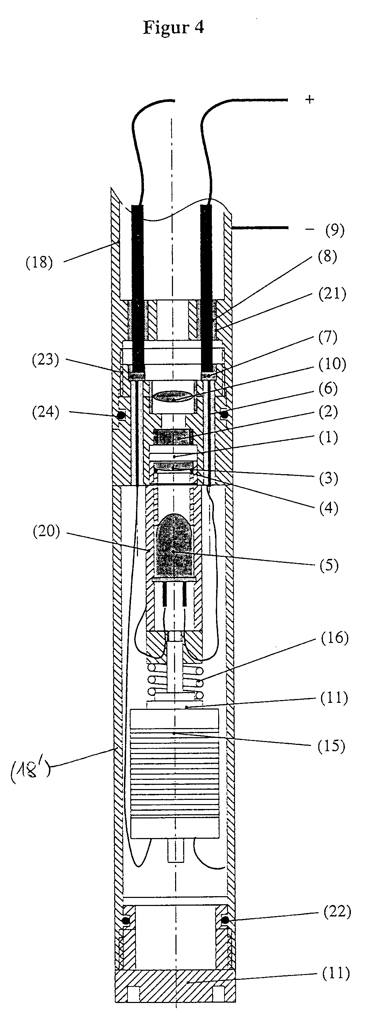

Das in axialer Richtung einerseits durch das Saphirglas 2 und andererseits durch die Kondensorlinse 3 begrenzte Meßvolumen 1 weist in axialer Richtung nur eine geringe optische Tiefe auf. Durch die geringe axiale Ausdehnung des Meßvolumens 1 wird verhindert, daß reflektierende Partikel, die sich außerhalb der optischen radialen Bildebene befinden, das Bild diffus ausleuchten. Um die axiale Ausdehnung des Meßvolumens 1 einstellen zu können, ist die Hülse 20 mit der Lichtquelle 5 und der Kondensorlinse 3 vorzugsweise in Achsrichtung verstellbar, wie dies die Ausführungsformen nach Fig. 3 und 4 zeigen.

Bei der Ausführungsform nach Fig. 3 ist in der Verlängerung 18' des stabförmigen Hohlkörpers 18 ein Mikromotor 13 angeordnet, der über eine Gewindestange 14 die Hülse 20 in dem Hohlkörper 18 zur Veränderung des Meßvolumens 1 verstellen kann.

Bei der Ausführungsform nach Fig. 4 ist ein Elektromagnet 15 vorgesehen, dessen Kern mit der Hülse 20 unter Zwischenschaltung einer Rückholfeder 16 verbunden ist.

Die Stromversorgung der Lichtquelle 5 sowie des Motors 13 bzw. des Elektromagneten 15 erfolgt über einen in Glas druckfest vergossenen und gegenüber dem Hohlkörper 18 isolierten elektrischen Leiter 6 (Pluspol), während das Gehäuse der Sonde selbst als Minuspol dient, wie bei 9 angedeutet ist. Der Minuspol kann aber auch analog zum Pluspol als gegenüber dem Gehäuse isolierter Leiter ausgebildet sein. Bei 8 ist eine Stromdurchführung mit Isolierung 21 an einem Flanschabschnitt des Hohlkörpers 18 wiedergegeben, die über einen Schleifkontakt 7 den elektrischen Kontakt zum Sondenkopf herstellt.

Das untere Ende der Verlängerung 18' des Hohlkörpers 18 ist durch einen Deckel 11 und einen O-Ring 22 druckdicht abgeschlossen.

Bei einer Messung wird der stabförmige Hohlkörper 18 mit dem Meßvolumen 1 in ein Fluid eingetaucht, wobei das Fluid das Meßvolumen 1 ausfüllt. Diese Sonde kann sehr einfach in einen Reaktor, einen Rührkessel, eine Gegenstromkolonne oder eine sonstige Vorrichtung eingebaut werden. Die elektrischen Durchführungen werden zweckmäßigerweise bis 200 bar druckfest ausgebildet. Zweckmäßigerweise wird die Sonde gegenüber Helium dicht ausgebildet und sie kann auch direkt in aggressive Meßmedien eingetaucht werden.

Bei dem dargestellten Ausführungsbeispiel ist der Hohlkörper 18 aus zwei Teilen ausgebildet, wobei der durch die Verlängerung 18' ausgebildete Sondenkopf mit Lichtquelle 5 und Meßvolumen 1 bei 23 in einen Abschnitt des Hohlkörpers 18 unter Zwischenschaltung eines O-Ringes 24 eingeschraubt ist. Die Linse 10 ist hierbei ebenfalls im Sondenkopf angeordnet. Der Schleifkontakt 7 dient zur Ausbildung des elektrischen Kontakts nach dem Einschrauben des Sondenkopfs.

Vorzugsweise ist der Sondenkopf beheizbar, damit eine Kristallisation bei gekühlten Fluiden vermieden werden kann.

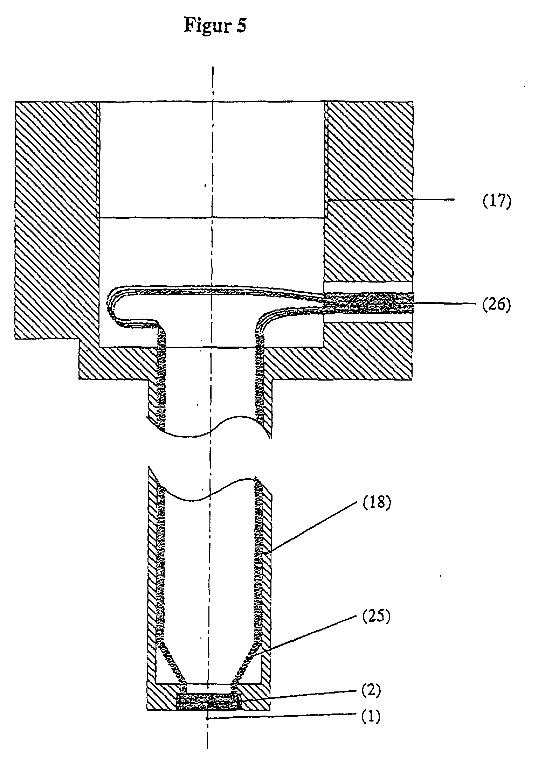

Fig. 5 zeigt eine abgewandelte Ausführungsform nach der Erfindung, wobei eine Lichtquelle, wie z.B. Laserdioden, LED oder Kaltlicht 26, auf der Seite der Fassung 17 angeordnet ist, so daß das Meßvolumen 1 mit Auflicht beleuchtet wird. Das Licht kann direkt durch den Hohlkörper 18 und durch das Saphirglasfenster 2 in das nach unten offenen Meßvolumen 1 eingeleitet werden, oder über radial außen angeordnete Glasfaserbündel 25, die längs der Innenwand des Hohlkörpers 18 durch das Saphirglasfenster 2 zum Meßvolumen 1 führen.

Bei einer derartigen Ausgestaltung mit Lichtquelle auf der Seite der Fassung 17 kann der Sondenkopf in der Länge verkürzt ausgebildet werden, wobei gegenüber der Bauform nach Fig. 1 die unter der Linie A-A liegenden Bauteile entfallen können. Das Meßvolumen 1 befindet sich hierbei freiliegend vor dem Saphirglasfenster 2.

## Patentansprüche

1. Sonde zur optischen Erfassung fluidisierter Partikel oder Tropfen, mit einer Fassung (17) zur Befestigung an einer Kamera und einem stabförmigen Hohlkörper (18), an dessen freiem Ende ein Meßvolumen (1) ausgebildet ist, das durch wenigstens ein transparentes Element (2, 3) gegenüber dem Hohlraum des Hohlkörpers (18) druckdicht abgeschlossen ist, wobei eine Lichtquelle (5, 25) zur Beleuchtung des Meßvolumens (1) vorgesehen ist.

2. Sonde nach Anspruch 1,
dadurch gekennzeichnet,
daß auf der der Fassung (17) gegenüberliegenden Seite des Meßvolumens (1) eine Lichtquelle (5) in einer Verlängerung (18') des Hohlkörpers (18) angeordnet ist und eine Stromversorgungsleitung (6) durch den Hohlkörper zu der Lichtquelle führt.

3. Sonde nach Anspruch 1,
dadurch gekennzeichnet,
daß die Lichtquelle auf der Seite der Fassung (17) angeordnet ist und das Meßvolumen mit Auflicht ausgeleuchtet wird.

4. Sonde nach Anspruch 3,
dadurch gekennzeichnet,
daß das Licht über Glasfasern (25) in das Meßvolumen (1) eingeleitet wird.

5. Sonde nach Anspruch 1,
dadurch gekennzeichnet,
daß zwischen Lichtquelle (5, 25) und Meßvolumen (1) ein optisches System (3) zur Homogenisierung des Lichteinfalls im Meßvolumen vorgesehen ist.

6. Sonde nach einem der vorhergehenden Ansprüche,
dadurch gekennzeichnet,
daß zwischen Meßvolumen (1) und Fassung (17) eine Linse (10) zur Tubusverlängerung angeordnet ist.

7. Sonde nach Anspruch 3,
dadurch gekennzeichnet,
daß die axiale Ausdehnung des Meßvolumens (1) verstellbar ist.

8. Sonde nach Anspruch 7,
dadurch gekennzeichnet,
daß ein Motor (13) oder ein Elektromagnet (15) zum Verstellen des Meßvolumens vorgesehen ist.

9. Sonde nach einem der vorhergehenden Ansprüche,
dadurch gekennzeichnet,
daß der durch den Hohlkörper (18) gebildete Sondenkopf beheizbar ist.

10. Sonde nach einem der vorhergehenden Ansprüche,
dadurch gekennzeichnet,
daß der Hohlkörper (18) über eine druckdichte Schraubverbindung mit der Fassung (17) oder einer Verlängerung (18') des Hohlkörpers (18) verbunden ist.
